# EUROPEAN PATENT SPECIFICATION

(11) **EP 2 422 081 B1**
(45) Date of publication and mention of the grant of the patent: **04.11.2015**
(21) Application number: 10718452.5
(22) Date of filing: 21.04.2010
(51) Int. Cl.: F03D 7/04, F03D 7/00

(54) **WIND TURBINE CONFIGURATION SYSTEM AND METHOD**
WINDTURBINENKONFIGURATIONSSYSTEM UND VERFAHREN
SYSTÈME ET MÉTHODE DE CONFIGURATION D'ÉOLIENNES

(30) Priority: 22.04.2009 DK 200900518; 22.04.2009 US 171673 P
(43) Date of publication of application: 29.02.2012
(73) Proprietor: Vestas Wind Systems A/S, 8200 Aarhus N (DK)
(72) Inventor: ORMEL, Frank, DK-8560 Kolind (DK); HOE, Merete, DK-8543 Hornslet (DK)
(74) Representative: Vestas Patents Department
(86) International application number: PCT/DK2010/000048
(87) International publication number: WO 2010/121615

(56) References cited:
- EP-A2- 1 361 489
- EP-A2- 1 873 396
- WO-A1-2008/043762
- DE-A1-102004 056 254

## Description

### Field of the invention

The invention relates to a wind turbine configuration system, a method of processing of a plurality of configuration parameter settings, and a software programme product capable of performing the method.

### Background of the invention

Remote monitoring of a large number of wind turbines, e.g. wind turbines in a wind park is well known and is advantageous in relation to control of the wind park and the wind turbines in the wind turbine park.

GB 2 405 492 disclose such a system for remote monitoring and control of a power generation plant. The system receives information (e.g. environmental measurements, power generation information, blade pitch angle and the like) from a power generation plant, and manipulates the received data to apply a performance model of the power generation plant and generates control commands based on the performance model.

EP 1 873 396 discloses a prior art wind energy system and method of operation.

It is generally an object to improve the operation of wind turbines, such as to increase the power production and/or control the loads and thereby the life time of wind turbine and parts thereof.

### Summary of the invention

It has been found by the inventors that a hitherto unrealised problem related to the above object is that the operation of wind turbines to a certain extent is based on erroneous and/or inefficient configuration parameter settings which may result in erroneous and/or inefficient operational control of the wind power plant. This may cause decreased power production, inefficient wind turbine control, overload of wind turbine components and even break down of wind turbine components.

The amount of configuration parameters in the wind turbines and their control systems have been increased in the recent years, and are still increasing to comprise several thousand parameters per wind turbine. However, e.g. due to the large number of different wind turbine types and different set-ups of these wind turbines, due to the large amount of wind turbines installed in general, due to software updates of the wind turbine control systems, and due to manual adjustable parameter setting, the configuration parameters may be incorrectly set. Likewise, parameters previously set may have been correctly set at the time, but it may later on emerge that these parameters can be adjusted to increase performance.

If the configuration parameters are set erroneously or inefficiently, it may result in inefficient or erroneous regulation of the wind turbine, erroneous alarm triggering, erroneous monitoring, inefficient performance, unnecessary wear on wind turbine components and/or even break down of wind turbine components.

The invention therefore relates to a wind turbine configuration system according to claim 1, said configuration system being configured for processing of a plurality configuration parameter settings, each setting being collected from the control system of one of a plurality of comparable wind turbines,
wherein the configurations system comprises processing means arranged to analyse the plurality of configuration parameter settings so as to identify a preferred range of setting for the configuration parameter,
the configuration system further being configured for initiating an optimization action of configuration parameter settings based on said identified preferred range(s) of setting(s).

Hereby it is possible to advantageously optimize configuration parameter settings which are different from the preferred ranges, and to act accordingly e.g. by automatically or manually adjusting the configuration data, by setting alarms and/or the like. This may increase security of the wind turbine, performance of the wind turbine, lifetime of wind turbine components and/or the like. Examples of configuration parameter settings are given later on.

In an aspect of the invention, the configuration system is configured for processing of sets of configuration parameters.

Hereby advantageous limitation of data communication may be achieved, and processing of configuration parameter settings of one or more configuration parameters may easily be based on settings of other configuration parameters which in some situations may be advantageous. Further it is efficient that the configuration system may access sets of plurality of configuration parameter settings from a wind turbine, since it may increase the speed of the processing.

By the term "sets of configuration parameters" is to be understood sets of configuration parameters each set being collected from a wind turbine control system, and the sets of configuration parameters comprises a plurality of configuration parameter settings, e.g. substantially all configuration parameter settings in the wind turbine control systems, it may comprise a plurality of predetermined configuration parameter settings, it may be configuration parameter settings relating to a specific wind turbine component or the like.

The configuration system may likewise in other embodiments process one configuration parameter setting at the time from each wind turbine control system, it may process a setting of a configuration parameter from each of one or more wind turbine control systems and sets of configuration parameter settings from one or more other wind turbine control systems, or the like.

In an aspect of the invention, the wind turbine configuration system is configured for collecting said configuration parameter settings from the wind turbine control systems by means of one or more data communication networks.

This facilitates that the analysis of the configuration parameter settings are based on configuration parameter settings, e.g. sets of configuration parameter settings, which are up to date. For example the wind turbine configuration system may collect configuration parameter settings with a predetermined time interval, the configuration system may collect configuration parameter settings based on earlier processing of data, e.g. from wind turbine control systems of wind turbines which has been determined to be comparable, it may collect data on demand from a user, or the like. Another example may be that the configuration system detects large variations in earlier collected or supplied configuration parameter settings, and therefore initiates a new collection of the respective configuration parameter settings to verify the earlier collected/ supplied settings.

It is understood that the wind turbine configuration system may collect sets of configuration parameter settings, each set comprising a plurality of configuration parameter settings from a specific wind turbine, it may collect one (or more) configuration parameter setting(s), e.g. determined by a user, by the wind turbine configuration system, by another system or the like.

In an aspect of the invention, the optimization action comprises adjustment of configuration parameter settings in one or more of said wind turbine control systems based on said identified preferred range of settings.

Hereby, it is achieved that the configuration parameter settings in the wind turbine control systems may be adjusted to comply with the identified preferred range of settings. In other aspects of the invention, the optimizing action may for example comprise that the configuration system may activate an alarm indicating that a configuration parameter setting should/may be adjusted, that a configuration parameter has been automatically adjusted by the configuration system or the like.

Further, in a preferred aspect of the invention the wind turbine configuration system is configured for identifying said comparable wind turbines from a larger selection of wind turbines.

Hereby it is achieved an up to date selection of comparable wind turbines. Likewise, the selection of comparable wind turbines may vary, e.g. if the goal of the processing of configuration parameter settings is to identify outliers, one selection of wind turbines may be comparable, whereas if the goal is to enhance performance, another section of wind turbines may be comparable. It is therefore advantageous if the configuration system facilitates identification of comparable wind turbines, e.g. based on the goal of the processing of configuration parameters. However in other aspects of the invention, a user may select a group of comparable wind turbines, the selection of comparable wind turbines may be identified by another system or the like.

In an aspect of the invention, said identification of comparable wind turbines is configured to be performed at least partly based on wind turbine set-up data.

Hereby a precise and advantageous identification of comparable wind turbines with comparable wind turbine components, rated power and the like may be performed.

In an aspect of the invention, said identification of comparable wind turbines is configured to be performed at least partly based on environmental data related to the wind turbines.

Hereby it is possible to select comparable wind turbines located in identical/ comparable environmental conditions.

The processing of configuration parameter settings is configured for identifying outlying configuration parameter settings of the analysed configuration parameter settings by means of the identified preferred range(s) of setting(s), and said optimization action comprises correction of said identified outlying configuration parameter settings.

Hereby it is possible to identify and correct outlying erroneous set configuration parameters, which may increase safety and/or efficiency of wind turbines.

In a preferred aspect of the invention, the processing means are further arranged to analyze collected wind turbine performance data together with said configuration parameter settings to identify said preferred range of settings for one or more of said configuration parameters for enhancement of wind turbine performance.

Hereby it is possible to identify configuration parameters which may by proper adjustment increase performance of wind turbines, and initiate the correcting action e.g. to adjust the configuration parameters correspondingly, to inform a user of the configuration system that performance may be enhanced by proper adjustment or the like.

In an aspect of the invention, said settings for one or more of said configuration parameters for enhancement of wind turbine performance are configuration settings identified to enhance active power production of a wind turbine.

It is advantageous to identify and/or adjust configuration parameters which may enhance active power production of wind turbines, to produce more renewable power.

In an aspect of the invention, said settings for one or more of said configuration parameters for enhancement of wind turbine performance are configuration settings identified to extend the lifetime of one or more wind turbine components.

It is cost-efficient and environmental friendly to achieve extended lifetime of wind turbine components.

In an aspect of the invention, the configuration system is integrated with a Supervisory Control And Data Acquisition (SCADA) system.

Hereby is achieved that the wind turbine configuration system is easily implemented in existing wind turbine parks. It is preferred that the configuration system is integrated with a global SCADA system such as a central SCADA system e.g. adapted for collecting data from individual SCADA systems in groups of wind turbines such as wind turbine plants.

In an aspect of the invention, said optimization action of configuration parameter settings is only performed if said configuration parameter settings deviates from said identified preferred range with a predetermined amount.

Hereby unnecessary alarms, and unnecessary and/or and negligible adjustments of configuration parameters may be avoided. For example, the predetermined amount may be deviations above a predetermined percentage, it may be deviations above or below a threshold or the like. Likewise a hysteresis may be implemented to avoid unnecessary adjustment, alarm triggering or the like.

In an aspect of the invention, the configuration parameters are assigned a hierarchy level chosen among at least two different hierarchy levels, and said configuration system is configured for choosing a type of optimization action of configuration parameter settings among at least two different optimization actions, based on the hierarchy level assigned to the configuration parameter.

Hereby may e.g. be achieved that adjustment of configuration parameters which may influent on the safety of a wind turbine are not performed without previous accept from a user, whereas other configuration parameter which do not affect safety of a wind turbine may be adjusted without accept from a user, thereby increasing safety and efficiency of the configuration system.

In an aspect of the invention, said optimization action of configuration parameter settings is configured to be automatically performed by adjusting configuration parameter settings directly in wind turbine control systems.

Hereby fast and efficient adjustment of configuration parameter settings may be achieved. In another aspect of the invention, the configuration system is configured for updating a database, e.g. associated with a SCADA system. The database (or SCADA system) may then subsequently update the configuration parameters in the wind turbine control systems.

The invention likewise relates to a method of processing of a plurality of configuration parameter settings according to claim 15, each setting being collected from the control system of one of a plurality of comparable wind turbines, said method comprising: analysis of the plurality of configuration parameter settings to identify a preferred range(s) of setting(s) for the configuration parameter, and
initiation of an optimization action of configuration parameter settings based on the identified preferred range(s) of setting(s).

Hereby it is possible to advantageously optimize configuration parameter settings which are different from the identified preferred range(s), and to act accordingly e.g. by automatically or manually adjusting the configuration data, by setting alarms and/or the like. This may increase security of the wind turbine, performance of the wind turbine, lifetime of wind turbine components and/or the like.

In an aspect of the invention, said method further comprises the step of collecting said plurality of configuration parameter settings from the wind turbine control systems.

This facilitates that the analysis of the configuration parameter settings are based on configuration parameter settings which are up to date. Examples of collection of settings have been given earlier in this document.

In an aspect of the method according to the invention, said optimization action comprises adjustment of configuration parameter settings in one or more of said wind turbine control systems based on the identified preferred range of settings.

Hereby, it is achieved that the configuration parameter settings in the wind turbine control systems may be adjusted to comply with the identified preferred range of settings.

In an aspect of the invention, said method further comprises the step of identifying comparable wind turbines from a larger selection of wind turbines.

Hereby it is achieved an up to date selection of comparable wind turbines. Likewise, the selection of comparable wind turbines may vary.

In an aspect of the method according to the invention, the identification of comparable wind turbines is at least partly based on wind turbine set-up data and/or environmental data related to the wind turbines.

Hereby a precise and advantageous identification of comparable wind turbines with comparable wind turbine components, rated power and the like may be performed, an/or it may be possible to select comparable wind turbines located in identical/ comparable environmental conditions.

Said method further comprises the step of identifying outlying configuration parameter settings of the analysed configuration parameter settings by means of the identified preferred range(s) of setting(s), and said optimization action comprises correction of said identified outlying configuration parameter settings.

Hereby it is possible to identify and correct outlying erroneous set configuration parameters, which may increase safety and/or efficiency of wind turbines.

In a preferred aspect of the method according to the invention, said configuration system analyzes collected wind turbine performance data together with said configuration parameter settings to identify said preferred range of settings for one or more of said configuration parameters for enhancement of wind turbine performance.

Hereby it is possible to identify configuration parameters which may by proper adjustment increase performance of wind turbines, and adjust the configuration parameters correspondingly.

In an aspect of the method according to the invention, the settings for one or more of said configuration parameters for enhancement of wind turbine performance are configuration settings identified to enhance active power production of a wind turbine and/or to extend the lifetime of one or more wind turbine components.

It is cost-efficient and environmental friendly to achieve extended lifetime of wind turbine components, and it is advantageous to enhance active power production of wind turbines, to produce more renewable power.

In an aspect of the method according to the invention, said configuration parameters are assigned a hierarchy level chosen among at least two different hierarchy levels, and, and said method comprises the step of choosing a type of optimization action of configuration parameter settings among at least two different optimization actions, based on the hierarchy level assigned to the configuration parameter.

Hereby, it may for example be achieved that adjustment of configuration parameters which may influent on the safety of a wind turbine are not performed without previous accept from a user, whereas other configuration parameter which do not affect safety of a wind turbine may be adjusted without accept from a user, thereby increasing safety and efficiency of the configuration system.

In an aspect of the method according to the invention, said optimization action of configuration parameter settings is automatically performed by adjusting configuration parameter settings directly in wind turbine control systems.

Hereby fast and efficient adjustment of configuration parameter settings may be achieved.

The invention likewise relates to a software programme product according to claim 24 which, when run on a computer, is capable of performing the method according to one or more of the claims 16-25.

A software programme product is an effective way of carrying out the method. It is understood that the software programme product may be stored on date carrying means, e.g. a CD, a DVD, a pen drive, on a memory card on a handheld device or the like, it may be stored in a RAM memory, it may be stored on memory means on a server or a PC or it may be stored in any other suitable way.

### Brief description of the drawings

The invention will be described in the following with reference to the figures in which:
- fig. 1: illustrates a large modern wind turbine as known in the art,
- fig. 2: illustrates the wind turbine configuration system connected by data communication networks to a plurality of wind turbines,
- fig. 2a: illustrates the wind turbine configuration system facilitating two processing actions to identify a preferred range(s) of setting(s)
- fig. 3: illustrates the wind turbine configuration system correcting deviating configuration parameters,
- fig. 4: illustrates the wind turbine configuration system correcting outlying configuration parameters,
- fig. 5: illustrates an embodiment of the invention to detect performance enhancing set point parameters,
- fig. 6: illustrates sets of configuration parameter settings stored in a table,
- fig. 7: illustrates configuration parameters assigned hierarchy levels.
- fig. 8: illustrates an embodiment of detecting/identifying outlying configuration parameter settings, and
- fig. 9: illustrates an embodiment of detecting/identifying outlying configuration parameter settings collected from the same wind turbine over time.

### Detailed description of embodiments

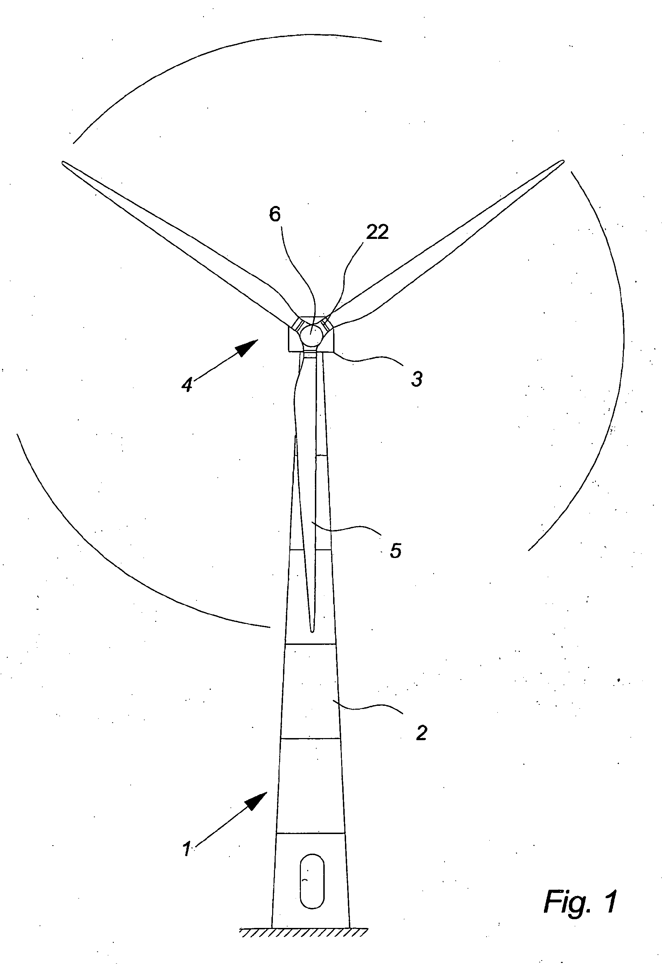

Fig. 1 illustrates a large modem wind turbine 1 as known in the art, comprising a tower 2 and a wind turbine nacelle 3 positioned on top of the tower 2. In this embodiment the wind turbine rotor 4 comprises three wind turbine blades 5 mounted on a common hub 6 which is connected to the nacelle 3 through the low speed shaft extending out of the nacelle 3 front. In another embodiment, the wind turbine rotor 4 could comprise another number of blades 5 such as one, two, four, five or more.

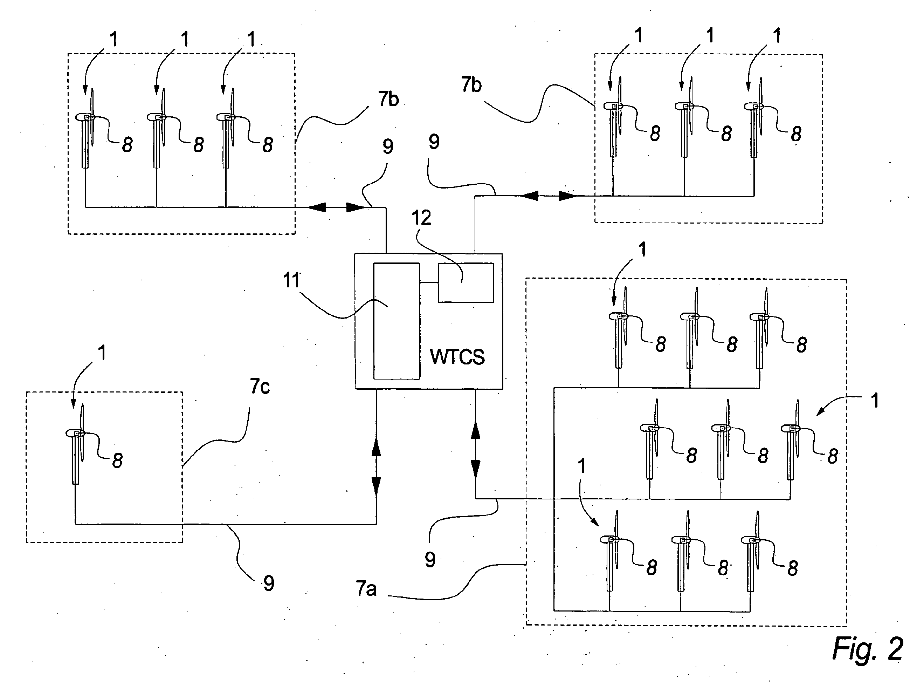

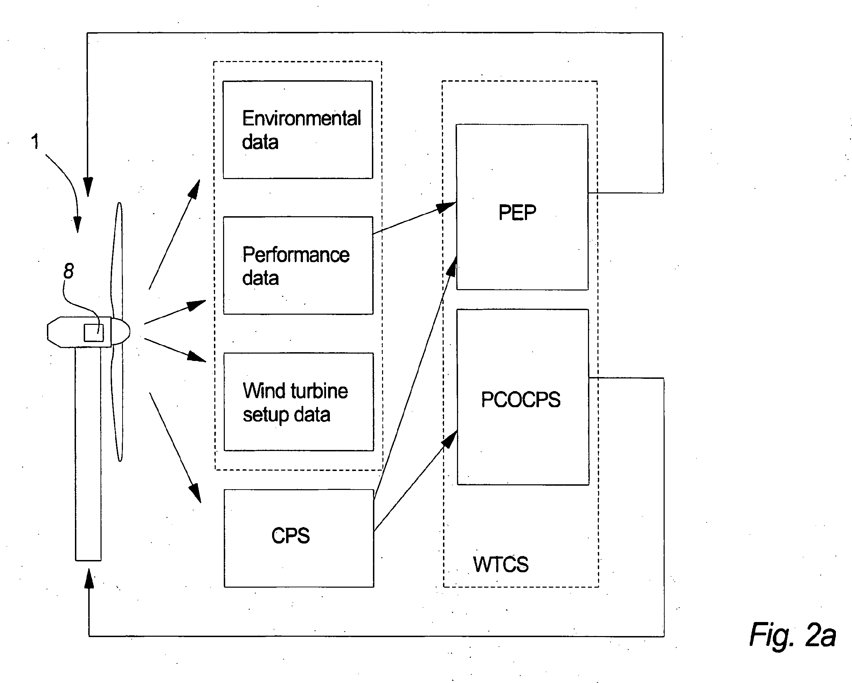

Fig. 2 illustrates a wind turbine configuration system WTCS according to the invention. The wind turbine configuration system WTCS may in the following also be referred to as configuration system WTCS.

The configuration system WTCS comprises data processing means 11 and storage means 12 which however in some cases may be optional. The storage means 12 may be used for at least temporarily storing collected configuration parameter settings CPS and/or other data produced by the configuration system WTCS during processing of data, e.g. to store selections of comparable wind turbines (explained later on) for later processing, to store the identified preferred range of setting(s) for the processed configuration parameters, to stored performed optimization actions of configuration parameter settings based on said identified preferred range(s) of setting(s) or the like.

The configuration system WTCS is configured for processing configuration parameter settings CPS collected from wind turbine control systems, and to analyze the configuration parameter settings CPS to identify a preferred range of setting(s) of the configuration parameters. It is understood that a set of configuration parameter settings CPS comprise settings of a plurality of different configuration parameters CP. The wind turbines 1 from which the configuration parameter settings CPS originate may be large groups of wind turbines 1 such as wind parks 7a or selections of wind turbines 1 in the wind parks 7a, it may be smaller groups 7b of wind turbines 1, or it may be wind turbines 1 not located in a group 7c. The wind turbines 1 may be arranged at a plurality of different locations under varying environmental conditions and it may be wind turbines 1 of different types and with different wind turbine set-ups. It may likewise be wind turbines 1 located in different countries, at different locations in the different countries, it may be offshore wind turbines or the like.

By the term "configuration parameter settings" is understood settings relating to configuration parameters. Examples of such types of configuration parameters may be threshold values for component temperatures, threshold limits for gear oil temperature, ambient temperature limits, threshold values for component load, e.g. blade load, shaft load, generator load etc., parameters for blade pitching, wind speed thresholds, power production thresholds (e.g. active power P, reactive power Q or apparent power S), time limit thresholds such as time limits for alarms, demands to output power, voltage and/or current quality, max/min limits for hydraulic pressure, hysteresis settings, and/or configuration parameters relevant to assure compliance with grid codes. It is however understood that any other suitable configuration parameters may be processed and optimized by the configuration system WTCS.

Likewise, by the term "wind turbine set-up data" is to be understood data relating to specific set-up(s) of wind turbines, e.g. data relating to specific wind turbine types with specific component types such as a specific blade type, a specific tower height a specific generator type, it may be data relating to, component ages, service information, rated max power (e.g. 2MW wind turbine, 3 MW wind turbine or the like), wind turbine owner information, maintenance agreements, country specific data such as grid codes etc. As an example, a specific 2MW wind turbine type arranged in a specific country in a specific environment comprises types of components e.g. chosen depending on the environmental conditions and/or the country in which the wind turbine is installed.

Further, by the term "environmental conditions" is to be understood conditions in which the wind turbines are installed, e.g. the wind conditions, the air humidity, the wind turbulence conditions, air temperature data, the atmospheric pressure, position data such as GPS data or the like. The environmental data may e.g. be measured data e.g. substantially continuously measured e.g. at the wind turbine and/or at weather stations, it may be stored data such as e.g. wind map data, experiential meteorological data for the location or the like.

As illustrated in fig. 2, the configuration system WTCS may collect configuration parameter settings CPS from wind turbine control systems 8 of the wind turbines 1 directly by means of one or more wired or wireless data communication networks 9 such as GSM networks, optical fiber networks, Local Area Networks or the like. However, it is understood that the configuration system WTCS may also (or instead) collect (or be supplied with) the configuration parameter settings CPS e.g: by means of communication networks 9, from databases, SCADA systems or any other systems comprising information regarding configuration parameter settings CPS of the relevant wind turbines 1. Likewise, the configuration parameter settings may also (or instead) be made available to the configuration system WTCS by other systems and/or data bases. Likewise the configuration system may in an embodiment of the invention be integrated with one or more SCADA systems.

It is likewise understood that environmental data, wind turbine set-up data, performance data and the like may be collected by the configuration system WTCS, and/or made available to the configuration system as explained above.

By the term "performance data" is to be understood data relating to the performance of the wind turbine, e.g. power output (such as active power, apparent power and/or reactive power), it may be measurements from sensors or derived from sensors in the wind turbines, e.g. component temperature, hydraulic fluid temperature, vibration/oscillation data (such as drive train vibrations, tower vibrations, blade vibrations (e.g. edgewise and/or flapwise)), load data, hydraulic pressure data, oil debris data, rotation speed data, coefficient(s) of utilization of the wind, or the like.

It should be understood that any other configuration parameters, performance data, wind turbine set-up data, and the data relating to environmental conditions, not mentioned in this document may also be relevant for the present invention, and that the examples given above are non-exhaustive examples.

Since the same configuration parameter in some situations may be defined or represented in different ways in different wind turbines, the configuration system may in an embodiment of the invention facilitate normalization of the data to assure that the data interpreted and processed correctly.

The configuration system WTCS is configured to initiate an optimization action of configuration parameter settings based on the identified preferred range(s) of setting(s). The optimization action may comprise adjustment of configuration parameters, alarm triggering, generation of information regarding that a configuration parameter should be or has been adjusted or the like. The optimization action is performed to identify outlying configuration parameter setting CPS, and it may be performed to enhance performance of wind turbines, examples of these scenarios are explained in more detail below.

Fig. 2a illustrates the wind turbine configuration system WTCS facilitating two processing actions to identify a preferred range(s) of setting(s) and a suitable optimization action with different goals, respectively a processing to enhance performance PEP and a processing to correct outlying/deviating configuration parameter settings PCOCPS.

As illustrated in fig 2a, the processing to correct outlying configuration parameter settings PCOCPS may process configuration parameter settings from comparable wind turbines substantially without processing of environmental data, performance data, wind turbine setup data and the like, e.g. by determining a normal distribution of the parameter settings or by other methods explained later on.

Likewise, as illustrated in fig. 2a, the process to enhance wind turbine performance PEP preferably uses both configuration parameter settings and other data, preferably wind turbine performance data, but it may also comprise environmental data and wind turbine setup data to identify configuration parameters CP for enhancement of wind turbine performance, and proper settings for these configuration parameter settings.

The wind turbine configuration system WTCS initiate the optimization action based on one or both of these processing and the identified preferred range(s), and may adjust the configuration parameter settings accordingly, directly in the relevant wind turbine control systems 8 of the comparable wind turbines, it may communicate the settings to a database, a user or the like, which may take care of the adjustment of the relevant configuration parameter settings in the wind turbine control system, or the like.

The configuration system WTCS may in a preferred embodiment of the invention (which is not shown in fig. 2a) facilitate identification of comparable wind turbines 1 from a larger selection of wind turbines 1, examples of identification of comparable wind turbines are given later on.

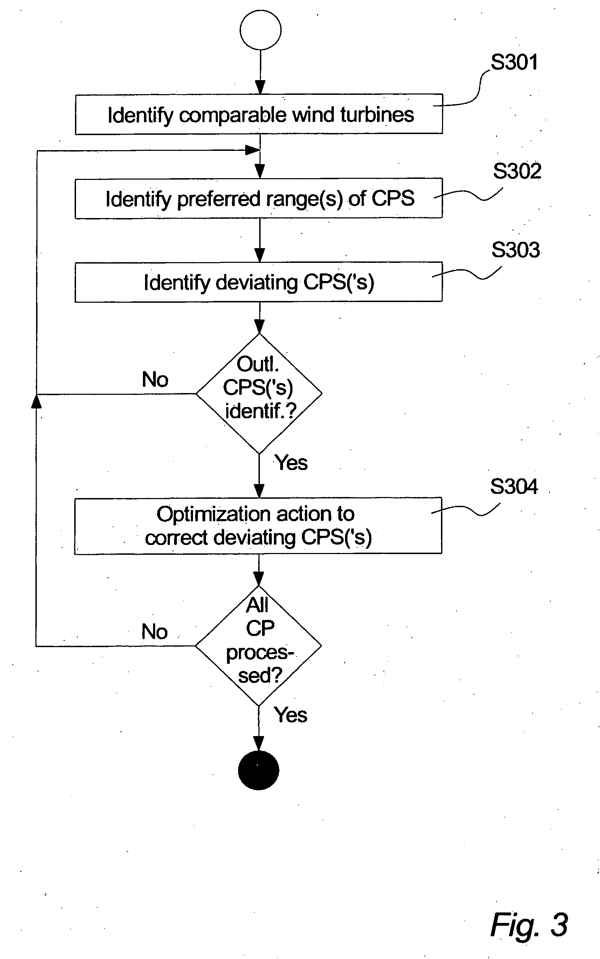

Fig.3 illustrates the configuration system WTCS correcting outlying configuration parameter settings.

The configuration system WTCS is configured for identifying comparable wind turbines (S301), to assure that the identification of the preferred ranges of setting(s) of the configuration parameter settings CPS is performed based on comparable data. This identification of comparable wind turbines may be performed by processing wind turbine set-up data collected e.g. from the wind turbines, one or more databases or the like, and/or environmental data collected from the location of the wind turbines, e.g. from the wind turbines, from weather stations or the like. As an example, 2MW wind turbines are not necessarily comparable e.g. when detecting outlying set-point parameters, since these wind turbines for example may comprise different component types, and may be installed in different environments which may result in different preferred range(s) of settings. Another example may be that a wind turbine is configured for living up to grid codes which may influent on the configuration settings. Therefore, by assuring that the configuration parameter settings which are processed, originates from comparable wind turbines, the optimization action(s) of the configuration parameter setting(s) is made more precise and safe.

In an embodiment of the invention, the identification of comparable wind turbines is at least partly based on processing of wind turbine parameters. As an example, wind turbine control systems 8 comprising configuration parameters CP which are not present in control systems 8 of other wind turbines 1 may indicate that the wind turbines 1 are, at least in some situations, not comparable.

It is likewise understood that the identification of comparable wind turbines in embodiments of the invention may also (or instead) be at least partly performed by other means, or may have been performed earlier by the configuration system WTCS, thereby making a new identification of comparable wind turbines unnecessary.

In an embodiment of the invention, the identification of comparable wind turbines is at least partly based on predefined criteria such as one or more predefined range(s). An example of such predetermined criteria may for example be to select off-shore wind turbines based on environmental data (e.g. by defining height above the sea to be substantially 0m which may be determined by GPS data), e.g. located in a specific wind environment such as in high wind locations (may e.g. be determined by measured wind data), and located at sites experiencing temperatures within a predefined temperature range (may e.g. be determined by measured ambient temperature data). Likewise the selection of comparable wind turbines may be determined based on predefined wind turbine set-up data such as rated power (e.g. if it is a 2MW or 3MW wind turbine), tower type, generator type etc. Thereby, a user may define some predetermined criteria to impose some limitations of wind turbines to be processed by the configuration system, and may thereby identify comparable wind turbines based on the predefined criteria.

It is further understood that a user in an embodiment of the invention may select a group of comparable wind turbines, i.e. the wind turbine configuration system WTCS does not identify comparable wind turbines 1, but is supplied the selection of wind turbines which are then processed by the configuration system WTCS to identify the preferred range(s) of configuration parameters settings, and initiate the optimization action of configuration parameter settings. As an example the user may select wind turbines in a specific wind park 7a, which hereby may make a selection of wind turbines which may be processed by the configuration system to identify comparable wind turbines, or the selection may be the final selection of comparable wind turbines.

In fig. 3, when the wind turbine configuration system WTCS has identified the comparable wind turbines in step S301, the configuration parameter settings is in step 302 processed to identify one or more preferred ranges of the settings of one or more configuration parameters. A preferred range may be identified by the configuration system to be one or more specific preferred settings, or it may be identified to be one or more ranges of settings, e.g. within a identified interval.

It is understood that the identifications of a preferred range may be performed for substantially every configuration parameter CP of a set of configuration parameters, and/or for selected configuration parameters CP of a set of configuration parameters.

As an example, the preferred ranges of the settings of one or more configuration parameters may be determined by calculating the normal distribution of configuration parameter settings of a configuration parameter, and defining one or more limits for configuration parameter settings. Parameter settings within this limit(s) are interpreted as being within the preferred range(s), and parameter settings outside this limit(s) are interpreted as outlying parameter settings which should be corrected.

In an embodiment of the invention the configuration system only initiates correction of an outlying parameter setting if the parameter settings deviate from the identified preferred range with a predetermined amount, for example more than a predefined percentage, e.g. 5-10% from the identified preferred range.

When the configuration system WTCS has determined the one or more preferred ranges, it is hereafter capable of identifying configuration parameter settings deviating from the identified preferred range(s), which is performed in step S303. If the configuration system WTCS detects/ identifies deviating configuration parameter settings CPS deviating from the one or more preferred ranges of configuration parameter settings (e.g. if outlying parameter settings are detected and/or parameter setting which by adjustment may enhance wind turbine performance), the WTCS in step S304 initiates the optimizing action e.g. to correct the deviating configuration parameter settings so that the configuration parameter settings complies with the identified preferred range(s) of configuration parameter setting(s). Thereby outlying configuration parameter settings, e.g. erroneous set configuration parameters, erroneously set due to manual adjustment by an operator, due to software updates or software errors in general may be detected, handled and corrected to assure more safe and efficient control of the wind turbine(s). Likewise performance may be increased by properly adjusting performance enhancing configuration parameters.

If the configuration system WTCS does not detect outlying configuration parameter settings CPS which need to be adjusted, it may be configured to process a new configuration parameter CP of a set of configuration parameters, as illustrated.

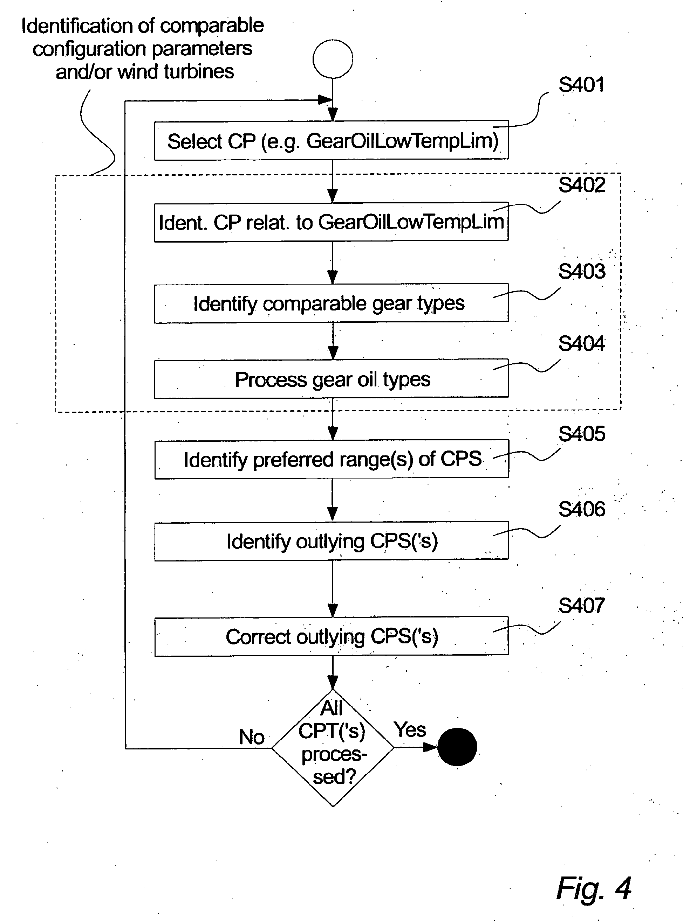

Fig. 4 illustrates one example of processing of a specific configuration parameter to detect outlying parameter settings. In this example, the configuration system WTCS choose a configuration parameter CP from a set of configuration parameters in step S401. In this example the threshold setting for allowable minimum gear oil temperature GearOilLowTempLim is chosen as example. However, it is understood that any other configuration parameter may be chosen, and that this example is not in any way limiting to the process of identifying comparable wind turbines/ configuration parameters, detecting outlying configuration parameters and the like.

The configuration system WTCS, after selecting a configuration parameter, initiates a process of identifying and selecting comparable wind turbines/comparable configuration parameters CP. In step S402, the configuration system WTCS identifies other configuration parameters relating to threshold configuration setting for minimum gear oil temperature. Then the configuration system identifies wind turbine set-up data in S403 relating to the type of gear from which the settings are collected, to verify that the configuration parameters does not originate from,gear boxes with properties making a comparison of configuration parameters erroneous. Then the configuration system WTCS process gear oil types in step S404, to identify if different oil types are used in the different gears, since the type of oil may have different properties depending on the temperature. The wind turbine configuration system WTCS hereafter process the wind turbine parameter settings in step S405 based on the above, and identifies a preferred range for the configuration parameter type. Based on the identified preferred range, the configuration system WTCS identifies outlying parameter settings in step 406, and can thereby initiate a correcting action, to correct the outlying parameter setting(s) in step S407.

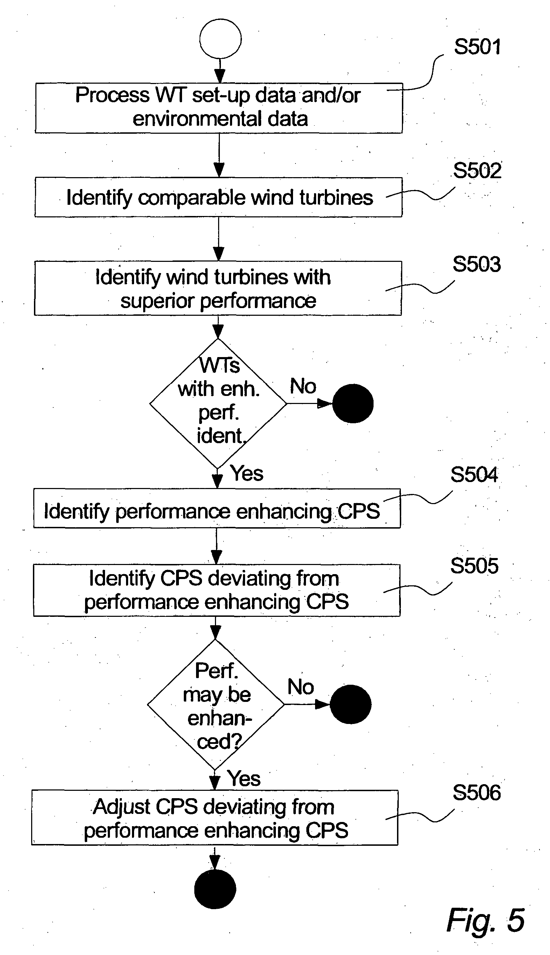

Fig. 5 illustrates another embodiment of the configuration system WTCS, where the configuration system WTCS facilitates enhancement of wind turbine performance. The performance enhancement may be performed to enhance performance in a plurality of ways, e.g. with the goal of increasing the power output of wind existing wind turbines, decrease the necessary service, decrease wear of the wind turbine components and the like.

In steps S501 and S502, the configuration system WTCS process wind turbine set-up data, and/or environmental data to identify comparable wind turbines and/or configuration parameters. This may for example be done by identifying and compare environmental data, e.g. temperatures, height above the sea, wind maps, atmospheric pressure, wind data from sites collected over a time period etc. The configuration system WTCS may also (or instead) sort out wind turbines based on their wind turbine set-up data, e.g. rated power, tower height, generator type, gear type, component ages etc.

The identification of comparable wind turbines ends up with a selection of comparable wind turbines (if comparable wind turbines are found), which may be used for identification of wind turbines with superior performance.

When the selection of comparable wind turbines is identified, the configuration system WTCS in step S503 identifies wind turbines of the selection of comparable wind turbines with superior performance, e.g. by comparing wind turbines which have experienced a remarkable low amount of service acts/visits, which comprise vibration data that is more advantageous than the expected vibration data e.g. when comparing wind turbine component age, which has a larger active power output than the other comparable wind turbines, or the like.

The configuration system WTCS may also process saved data such as wind data, turbulence data, power production, coefficients of utilization and the like, to identify superior performance under certain environmental conditions. For example a wind turbine at one location may be identified to have an enhanced coefficient of utilization when certain environmental conditions are present and certain configuration parameters are set in a specific way. Thereby, by identifying the specific environmental conditions and parameter settings, other wind turbines which have experienced or may experience the same environmental conditions may be adapted also to have the enhanced coefficient of utilization under these environmental conditions.

Turning back to figure 5, if wind turbines with enhanced/superior performance are identified, the configuration system WTCS in step S504 initiates a process to identify settings for one or more of said configuration parameters CP for enhancement of wind turbine performance. These configuration parameters may in the following also be referred to as performance enhancing configuration parameter settings. Then the configuration system WTCS in step S505 compares configuration parameter settings CPS which deviates from the settings of the performance enhancing configuration parameter settings. If the configuration system WTCS identifies that performance of wind turbines with configuration settings deviating from the identified performance enhancing configuration parameter settings PECPS is lower, the configuration system WTCS in step S506 initiates the optimizing action, e.g. to adjust the deviating configuration parameter settings CPS. It is understood that the optimizing action may comprise notifications to users, an adjustment of the configuration parameters, and/or a monitoring of the result of the adjustment, to identify if the adjustment enhances or worsen performance, or the like.

Likewise, it is generally understood that the optimizing action may comprise gradual adjustment (especially if the adjustment to be performed is considerable) of the configuration parameter(s) to facilitate a more secure and reliable optimization.

It is further generally understood that the order of the operations performed by the wind turbine configuration system WTCS, e.g. as illustrated in figs. 3, 4 and/or 5 may be altered in a multitude of ways, e.g. the identification of comparable wind turbines by processing environmental data and/or set-up data may be performed in different orders, wind turbines with enhanced performance may in some situations be identified before identifying comparable wind turbines, or the like.

In an embodiment of the invention, the Configuration systems is configured for performing one or more processes to double-check that a configuration parameter setting is an outlier, that a configuration parameter setting may enhance performance, or the like. This may e.g. increase safety of the configuration system WTCS.

Likewise, it is generally understood that any suitable methods of identifying deviating/outlying configuration parameter settings CPS, performance enhancing configuration parameter settings CPS, suitable optimizing action(s) or the like, e.g. by methods such as calculating average values, normal distributions, RMS (Root Mean Square) values, by statistic analysis of data and the like known to a skilled person, may be utilized by the wind turbine configuration system WTCS.

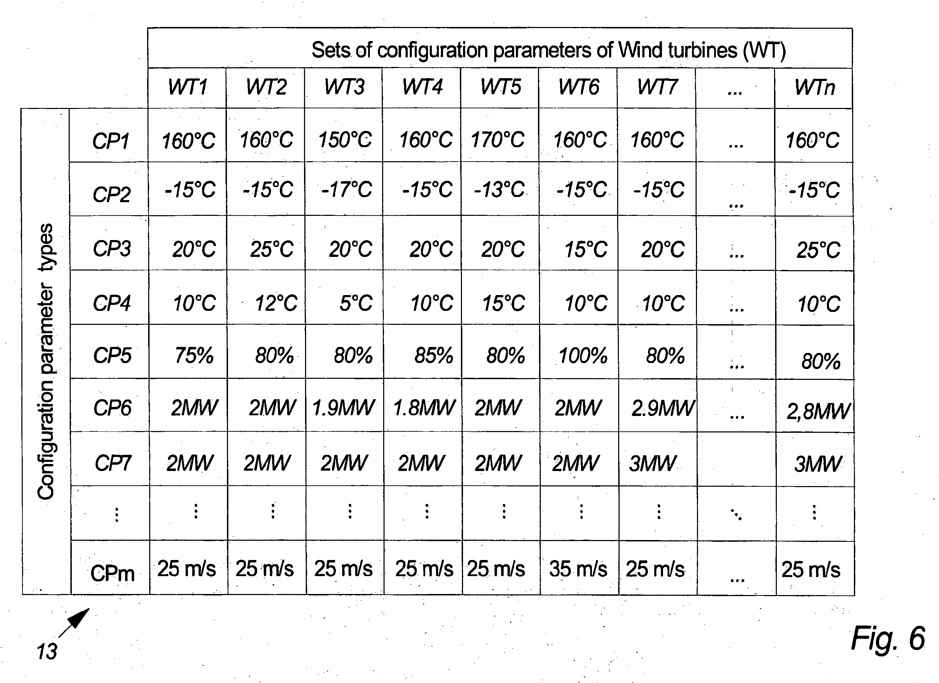

Fig. 6 illustrates an example of a part of sets of configuration parameters CP stored in a configuration parameter table 13, e.g. in the storage means 12 of the configuration system WTCS. In the example, the configuration parameters CP1-CPm are configuration parameters of the sets of configuration parameters, collected from a selection of comparable wind turbines WT, 1. The configuration parameter CP1 may e.g. relate to a maximum acceptable temperature value of a specific wind turbine component, and the configuration parameter CP2 may relate to a minimum acceptable temperature value. Likewise the configuration parameters CP3 and CP4 may relate to be regulation thresholds (e.g. temperature values aimed at during cooling or heating of a cooling or heating system), the configuration parameter CP5 may relate to the maximum allowed load on a wind turbine component, e.g. the maximum allowed load on a generator, a gearbox or the like, the configuration parameter CP6 may relate to the power production aimed at for each wind turbine WT₁-WTₙ, the configuration parameter CP7 may be the rated power of the wind turbine, and the set-point parameter CPm may be a max allowed wind speed before the wind turbine is shut down to avoid damages.

In the case of fig. 6, configuration parameter CPm of wind turbine WT6 and configuration parameter CP4 from wind turbine WT3 may be identified as outliers from the rest of the configuration parameter settings, and may thereby result in correction of the outlying configuration parameter settings.

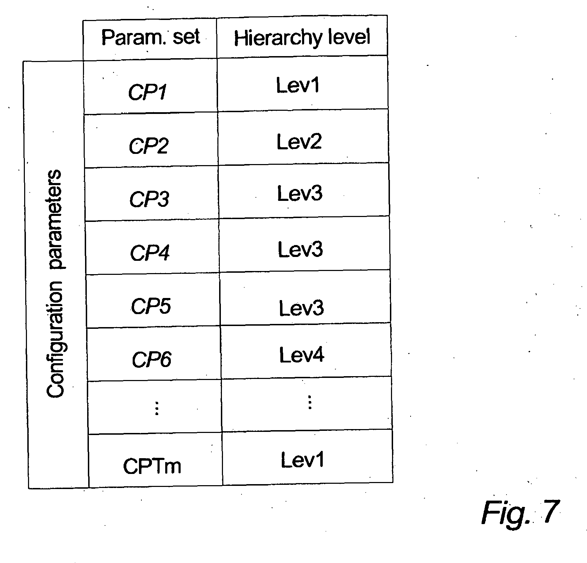

Fig. 7 illustrates an embodiment of the invention wherein the configuration parameters of a set of configuration parameters are assigned (by the configuration system WTCS and/or by other means) different hierarchy levels. The configuration system WTCS is in this embodiment of the invention configured for choosing a type of optimization action of configuration parameter settings among at least two different optimization actions, based on the hierarchy level assigned to the configuration parameter.

For example, critical set-point parameter types assigned a first hierarchy level Lev1 may result in an optimizing action comprising triggering of an alarm to inform an operator that a setting of a critical parameter type deviates or is outlying from a preferred range of setting(s) and should be double checked and taken care of as soon as possible. A second hierarchy level Lev2 may result in an optimizing action comprising triggering of an alarm and at the same time allow the configuration parameter type to be automatically adjusted, e.g. by the configuration system WTCS. A third hierarchy level Lev3 may result in an optimizing action comprising adjustment of a set-point parameter type without triggering an alarm. An example of a fourth hierarchy level Lev4 may be a level triggering a low rated flag just for informing that a set-point parameter of less importance deviates from the referred range of setting(s) and has been adjusted. It is understood that other relevant hierarchy levels may likewise be used.

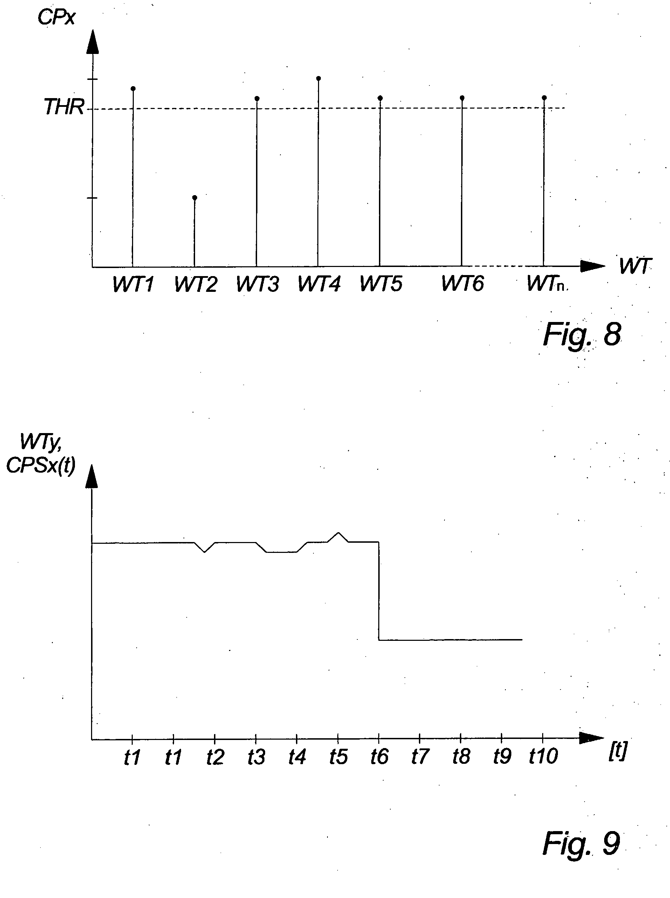

Fig. 8 illustrates an embodiment of detecting/identifying outlying configuration parameter settings CPS. Settings of a configuration parameter CPx from each comparable wind turbine is in this embodiment evaluated to detect outliers/deviations above or below a specific threshold THR. The threshold THR may be a predetermined value, e.g. a rated max temperature of a wind turbine component, it may be determined on the basis of a comparison/evaluation of the plurality of configuration parameters or the like, resulting in the identified preferred range(s) of settings, or the like. In the example in fig. 8 the setting of the configuration parameter CPS collected from the wind turbine WT₂ deviates from the parameter setting collected from the rest of the of wind turbines in the collection of comparable wind turbines, resulting in a triggering of the correcting action to correct the deviating/outlying set-point of the wind turbine WT₂.

Fig. 9 illustrates another embodiment of detecting/identifying outlying configuration parameter settings CPS. In this embodiment each collection of the same configuration parameter from the control system 8 of a wind turbine WTy is stored, e.g. by means of the storage means 12, over time. The plurality of collections of the settings of the configuration parameter CPS over time from the same wind turbine WTy is compared to detect deviations. As illustrated in fig. 9 the parameter setting CPS for the configuration parameter CPSx at t=t₅ changes drastically. This change result in a detection of a deviation compared to earlier collected parameter set-points of the same configuration parameter CPx from the same wind turbine WTy, thereby triggering a correcting action.

The invention has been exemplified above with reference to specific examples of configuration parameters, examples of ways to identity preferred ranges, examples of ways of identifying comparable wind turbines and configuration parameters, examples of optimizing actions and the like. However, it should be understood that the invention is not limited to the particular examples described above but may be designed and altered in a multitude of varieties within the scope of the invention as specified in the claims.

### List

- 1, WT.: Wind turbine
- 2.: Tower
- 3.: Nacelle
- 4.: Rotor
- 5.: Blade
- 6.: Hub
- 7a.: Wind park
- 7b.: Smaller group of wind turbines
- 7c.: Wind turbine not located in a group
- 8.: Wind turbine control system
- 9.: Data communication network
- 10.: Evaluation system
- 11.: Data processing means
- 12.: Storage means
- 13.: Configuration parameter table
- THR.: Threshold
- WT1-WTn.: Wind turbines 1 in wind turbine park 7
- Lev1-Lev4.: Hierarchy levels
- WTCS: Wind turbine configuration system
- CP: Configuration parameter(s)
- CPS: Configuration parameter setting(s)
- PEP: Processing to Enhance Performance.
- PCOCPS: Processing to Correct Outlying Configuration Parameter Settings

## Claims

1. A wind turbine configuration system (WTCS), said configuration system being configured for processing of a plurality of configuration parameter settings, each setting being collected from the control system of one of a plurality of comparable wind turbines,
wherein the configuration system comprises processing means arranged to analyse the plurality of configuration parameter settings so as to identify a preferred range of setting for the configuration parameter (S302, S405),
the configuration system further being configured for initiating an optimization action of configuration parameter settings based on said identified preferred range(s) of setting(s) (S303, S304),
**characterised in that** said processing of configuration parameter settings is configured for identifying outlying configuration parameter settings of the analysed configuration parameter settings by means of the identified preferred range(s) of setting(s) (S406), and
wherein said optimization action comprises correction of said identified outlying configuration parameter settings (S407).

2. A wind turbine configuration system according to claim 1 wherein the configuration system is configured for processing sets of configuration parameters.

3. A wind turbine configuration system according to claim 1 or 2, wherein the wind turbine configuration system is configured for collecting said configuration parameter settings from the wind turbine control systems by means of one or more data communication networks.

4. A wind turbine configuration system according to claim 1,2 or 3 wherein said optimization action comprises adjustment of configuration parameter settings in one or more of said wind turbine control systems based on said identified preferred range of settings.

5. A wind turbine configuration system according to any of the preceding claims, wherein said configuration system is configured for identifying said comparable wind turbines from a larger selection of wind turbines.

6. A wind turbine configuration system according to claim 5, wherein said identification of comparable wind turbines is configured to be performed at least partly based on wind turbine set-up data.

7. A wind turbine configuration system according to claim 5 or 6, wherein said identification of comparable wind turbines is configured to be performed at least partly based on environmental data related to the wind turbines.

8. A wind turbine configuration system according to any of the preceding claims, wherein said configuration system processing means are further arranged to analyze collected wind turbine performance data together with said configuration parameter settings to identify said preferred range of settings for one or more of said configuration parameters for enhancement of wind turbine performance.

9. A wind turbine configuration system according to claim 8, wherein said settings for one or more of said configuration parameters for enhancement of wind turbine performance are configuration settings identified to enhance active power production of a wind turbine.

10. A wind turbine configuration system according to claim 8 or 9, wherein said settings for one or more of said configuration parameters for enhancement of wind turbine performance are configuration settings identified to extend the lifetime of one or more wind turbine components.

11. A wind turbine configuration system according to any of the preceding claims, wherein said configuration system is integrated with a Supervisory Control And Data Acquisition (SCADA) system.

12. A wind turbine configuration system according to any of the preceding claims, wherein said optimization action of configuration parameter settings is only performed if said configuration parameter settings deviates from said identified preferred range with a predetermined amount.

13. A wind turbine configuration system according to any of the preceding claims, wherein said configuration parameters are assigned a hierarchy level chosen among at least two different hierarchy levels, and
wherein said configuration system is configured for choosing a type of optimization action of configuration parameter settings among at least two different optimization actions, based on the hierarchy level assigned to the configuration parameter.

14. A wind turbine configuration system according to any of the preceding claims, wherein said optimization action of configuration parameter settings is configured to be automatically performed by adjusting configuration parameter settings directly in wind turbine control systems.

15. A method of processing of a plurality of configuration parameter settings, each setting being collected from the control system of one of a plurality of comparable wind turbines, said method comprising:
analysis of the plurality of configuration parameter settings to identify a preferred range(s) of setting(s) for the configuration parameter (S302, S405), and
initiation of an optimization action of configuration parameter settings based on the identified preferred range(s) of setting(s) (S303, S304),
the method further comprising the step of identifying outlying configuration parameter settings of the analysed configuration parameter settings by means of the identified preferred range(s) of setting(s) (S406), and
wherein said optimization action comprises correction of said identified outlying configuration parameter settings (S407).

16. A method according to claim 15, further comprising the step of collecting said plurality of configuration parameter settings from the wind turbine control systems.

17. A method according to claim 15 or 16, wherein said optimization action comprises adjustment of configuration parameter settings in one or more of said wind turbine control systems based on the identified preferred range of settings.

18. A method according to claim 15, 16 or 17, further comprising the step of identifying comparable wind turbines from a larger selection of wind turbines.

19. A method according to claim 18, wherein the identification of comparable wind turbines is at least partly based on wind turbine set-up data and/or environmental data related to the wind turbines.

20. A method according to any of the claims 15-19, wherein said configuration system analyzes collected wind turbine performance data together with said configuration parameter settings to identify said preferred range of settings for one or more of said configuration parameters for enhancement of wind turbine performance.

21. A method according to claim 20, wherein said settings for one or more of said configuration parameters for enhancement of wind turbine performance are configuration settings identified to enhance active power production of a wind turbine and/or to extend the lifetime of one or more wind turbine components.

22. A method according to any of the claims 15-21, wherein said configuration parameters are assigned a hierarchy level chosen among at least two different hierarchy levels, and
wherein said method comprises the step of choosing a type of optimization action of configuration parameter settings among at least two different optimization actions, based on the hierarchy level assigned to the configuration parameter.

23. A method according to any of the claims 15-23, wherein said optimization action of configuration parameter settings is automatically performed by adjusting configuration parameter settings directly in wind turbine control systems.

24. A software programme product which, when run on a computer, is capable of performing the method according to one or more of the claims 15-23.

## Patentansprüche

1. Windturbinenkonfigurationssystem (WTKS), wobei das Konfigurationssystem zum Verarbeiten mehrerer Konfigurationsparametereinstellungen konfiguriert ist, wobei jede Einstellung von dem Steuersystem einer von mehreren vergleichbaren Windturbinen erfasst wird,
wobei das Konfigurationssystem Verarbeitungsmittel umfasst, die dazu eingerichtet sind, die mehreren Konfigurationsparametereinstellungen zu analysieren, um einen bevorzugten Einstellungsbereich für die Konfigurationsparameter zu identifizieren (S302, S405),
wobei das Konfigurationssystem weiterhin zum Initiieren einer Optimierungsaktion von Konfigurationsparametereinstellungen auf der Basis des bzw. der identifizierten bevorzugten Einstellungsbereiche konfiguriert ist (S303, S304),
**dadurch gekennzeichnet, dass** die Verarbeitung von Konfigurationsparametereinstellungen zum Identifizieren außerhalb liegender Konfigurationsparametereinstellungen der analysierten Konfigurationsparametereinstellungen mittels des bzw. der identifizierten bevorzugten Einstellungsbereiche konfiguriert ist (S406), und
wobei die Optimierungsaktion eine Korrektur der identifizierten außerhalb liegenden Konfigurationsparametereinstellungen umfasst (S407).

2. Windturbinenkonfigurationssystem nach Anspruch 1, wobei das Konfigurationssystem zum Verarbeiten von Sätzen von Konfigurationsparametern konfiguriert ist.

3. Windturbinenkonfigurationssystem nach Anspruch 1 oder 2, wobei das Windturbinenkonfigurationssystem zum Erfassen der Konfigurationsparametereinstellungen von den Windturbinensteuersystemen mittels eines oder mehrerer Datenkommunikationsnetze konfiguriert ist.

4. Windturbinenkonfigurationssystem nach Anspruch 1, 2 oder 3, wobei die Optimierungsaktion eine Justierung von Konfigurationsparametereinstellungen in einem oder mehreren der Windturbinensteuersysteme auf der Basis des identifizierten bevorzugten Einstellungsbereichs umfasst.

5. Windturbinenkonfigurationssystem nach einem der vorhergehenden Ansprüche, wobei das Konfigurationssystem zum Identifizieren der vergleichbaren Windturbinen aus einer größeren Auswahl von Windturbinen konfiguriert ist.

6. Windturbinenkonfigurationssystem nach Anspruch 5, wobei die Identifizierung vergleichbarer Windturbinen dazu konfiguriert ist, zumindest zum Teil auf der Basis von Windturbineneinrichtungsdaten durchgeführt zu werden.

7. Windturbinenkonfigurationssystem nach Anspruch 5 oder 6, wobei die Identifizierung vergleichbarer Windturbinen dazu konfiguriert ist, zumindest zum Teil auf der Basis von Umgebungsdaten in Bezug auf die Windturbinen durchgeführt zu werden.

8. Windturbinenkonfigurationssystem nach einem der vorhergehenden Ansprüche, wobei die Konfigurationssystemverarbeitungsmittel weiterhin dazu eingerichtet sind, erfasste Windturbinenleistungsdaten zusammen mit den Konfigurationsparametereinstellungen zu analysieren, um den bevorzugten Einstellungsbereich für einen oder mehrere der Konfigurationsparameter zur Verbesserung der Windturbinenleistung zu identifizieren.

9. Windturbinenkonfigurationssystem nach Anspruch 8, wobei die Einstellungen für einen oder mehrere der Konfigurationsparameter zur Verbesserung der Windturbinenleistung Konfigurationseinstellungen sind, die identifiziert wurden, um die Wirkleistungsproduktion einer Windturbine zu verbessern.

10. Windturbinenkonfigurationssystem nach Anspruch 8 oder 9, wobei die Einstellungen für einen oder mehrere der Konfigurationsparameter zur Verbesserung der Windturbinenleistung Konfigurationseinstellungen sind, die identifiziert wurden, um die Lebensdauer einer oder mehrerer Windturbinenkomponenten zu verlängern.

11. Windturbinenkonfigurationssystem nach einem der vorhergehenden Ansprüche, wobei das Konfigurationssystem mit einem Überwachungs-, Steuerungs- und Datenerfassungssystem (ÜSE-System) integriert ist.

12. Windturbinenkonfigurationssystem nach einem der vorhergehenden Ansprüche, wobei die Optimierungsaktion von Konfigurationsparametereinstellungen nur durchgeführt wird, wenn die Konfigurationsparametereinstellungen von dem identifizierten bevorzugten Bereich um einen vorherbestimmten Umfang abweichen.

13. Windturbinenkonfigurationssystem nach einem der vorhergehenden Ansprüche, wobei den Konfigurationsparametern ein Hierarchieniveau zugeordnet wird, das aus mindestens zwei unterschiedlichen Hierarchieniveaus ausgewählt ist, und
wobei das Konfigurationssystem zum Auswählen eines Typs von Optimierungsaktion von Konfigurationsparametereinstellungen aus mindestens zwei unterschiedlichen Optimierungsaktionen auf der Basis des Hierarchieniveaus, das dem Konfigurationsparameter zugeordnet wurde, konfiguriert ist.

14. Windturbinenkonfigurationssystem nach einem der vorhergehenden Ansprüche, wobei die Optimierungsaktion von Konfigurationsparametereinstellungen dazu konfiguriert ist, durch Justieren von Konfigurationsparametereinstellungen direkt in Windturbinensteuersystemen automatisch durchgeführt zu werden.

15. Verfahren zur Verarbeitung mehrerer Konfigurationsparametereinstellungen, wobei jede Einstellung von dem Steuersystem einer von mehreren vergleichbaren Windturbinen erfasst wird, wobei das Verfahren Folgendes umfasst:
Analyse der mehreren Konfigurationsparametereinstellungen, um einen bzw. mehrere bevorzugte Einstellungsbereiche für die Konfigurationsparameter zu identifizieren (S302, S405), und
Initiierung einer Optimierungsaktion von Konfigurationsparametereinstellungen auf der Basis des bzw. der identifizierten bevorzugten Einstellungsbereiche (S303, 5304),
wobei das Verfahren weiterhin den Schritt des Identifizierens außerhalb liegender Konfigurationsparametereinstellungen der analysierten Konfigurationsparametereinstellungen mittels des bzw. der identifizierten bevorzugten Einstellungsbereiche umfasst (S406) und
wobei die Optimierungsaktion eine Korrektur der identifizierten außerhalb liegenden Konfigurationsparametereinstellungen umfasst (S407).

16. Verfahren nach Anspruch 15, das weiterhin den Schritt des Erfassens der mehreren Konfigurationsparametereinstellungen von den Windturbinensteuersystemen umfasst.

17. Verfahren nach Anspruch 15 oder 16, wobei die Optimierungsaktion eine Justierung von Konfigurationsparametereinstellungen in einem oder mehreren der Windturbinensteuersysteme auf der Basis des identifizierten bevorzugten Einstellungsbereichs umfasst.

18. Verfahren nach Anspruch 15, 16 oder 17, das weiterhin den Schritt des Identifizierens vergleichbarer Windturbinen aus einer größeren Auswahl von Windturbinen umfasst.

19. Verfahren nach Anspruch 18, wobei die Identifizierung vergleichbarer Windturbinen zumindest zum Teil auf Windturbineneinrichtungsdaten und/oder Umgebungsdaten in Bezug auf die Windturbinen basiert.

20. Verfahren nach einem der Ansprüche 15-19, wobei das Konfigurationssystem erfasste Windturbinenleistungsdaten zusammen mit den Konfigurationsparametereinstellungen analysiert, um den bevorzugten Einstellungsbereich für einen oder mehrere der Konfigurationsparameter zur Verbesserung der Windturbinenleistung zu identifizieren.

21. Verfahren nach Anspruch 20, wobei die Einstellungen für einen oder mehrere der Konfigurationsparameter zur Verbesserung der Windturbinenleistung Konfigurationseinstellungen sind, die identifiziert wurden, um die Wirkleistungsproduktion einer Windturbine zu verbessern und/oder die Lebensdauer einer oder mehrerer Windturbinenkomponenten zu verlängern.

22. Verfahren nach einem der Ansprüche 15-21, wobei den Konfigurationsparametern ein Hierarchieniveau zugeordnet wird, das aus mindestens zwei unterschiedlichen Hierarchieniveaus ausgewählt ist, und
wobei das Verfahren den Schritt des Auswählens eines Typs von Optimierungsaktion von Konfigurationsparametereinstellungen aus mindestens zwei unterschiedlichen Optimierungsaktionen auf der Basis des Hierarchieniveaus, das dem Konfigurationsparameter zugeordnet wurde, umfasst.

23. Verfahren nach einem der Ansprüche 15-23, wobei die Optimierungsaktion von Konfigurationsparametereinstellungen durch Justieren von Konfigurationsparametereinstellungen direkt in Windturbinensteuersystemen automatisch durchgeführt wird.

24. Softwareprogrammprodukt, das bei Ausführen auf einem Computer das Verfahren nach einem oder mehreren der Ansprüche 15-23 durchführen kann.

## Revendications

1. Système de configuration d'éoliennes (WTCS), ledit système de configuration étant configuré pour traiter une pluralité de réglages de paramètres de configuration, chaque réglage étant recueilli auprès du système de commande de l'une d'une pluralité d'éoliennes comparables,
dans lequel le système de configuration comprend des moyens de traitement qui sont à même d'analyser la pluralité de réglages de paramètres de configuration de façon à identifier une plage préférée de réglage pour le paramètre de configuration (S302, S405),
le système de configuration étant en outre configuré pour initier une action d'optimisation de réglages de paramètres de configuration sur la base de la ou desdites plages préférées identifiées de réglage(s) (S303, S304),
**caractérisé en ce que** ledit traitement des réglages de paramètres de configuration est configuré pour identifier des réglages de paramètres de configuration écartés des réglages de paramètres de configuration analysés au moyen de la ou des plages préférées identifiées de réglage(s) (S406), et
dans lequel ladite action d'optimisation comprend la correction desdits réglages de paramètres de configuration écartés identifiés (S407).

2. Système de configuration d'éoliennes selon la revendication 1, dans lequel le système de configuration est configuré pour traiter des ensembles de paramètres de configuration.

3. Système de configuration d'éoliennes selon la revendication 1 ou la revendication 2, dans lequel le système de configuration d'éolienne est configuré pour recueillir lesdits réglages de paramètres de configuration provenant des systèmes de commande d'éoliennes au moyen d'un ou plus de réseaux de communication de données.

4. Système de configuration d'éoliennes selon la revendication 1, 2 ou 3, dans lequel ladite action d'optimisation comprend l'ajustement de réglages de paramètres de configuration dans un ou plus desdits systèmes de commande d'éoliennes sur la base de ladite plage identifiée préférée de réglages.

5. Système de configuration d'éoliennes selon l'une quelconque des revendications précédentes, dans lequel ledit système de configuration est configuré pour identifier lesdites éoliennes comparables entre une plus grande sélection d'éoliennes.

6. Système de configuration d'éoliennes selon la revendication 5, dans lequel ladite identification d'éoliennes comparables est configurée pour être effectuée au moins en partie sur la base des données établies des éoliennes.

7. Système de configuration d'éoliennes selon la revendication 5 ou la revendication 6, dans lequel ladite identification d'éoliennes comparables est configurée pour être réalisée au moins en partie sur la base de données environnementales se rapportant aux éoliennes.

8. Système de configuration d'éoliennes selon l'une quelconque des revendications précédentes, dans lequel lesdits moyens de traitement du système de configuration sont en outre aménagés pour analyser des données de performances d'éoliennes recueillies conjointement avec lesdits réglages de paramètres de configuration pour identifier ladite plage préférée de réglages pour un ou plus desdits paramètres de configuration afin d'améliorer les performances des éoliennes.

9. Système de configuration d'éoliennes selon la revendication 8, dans lequel lesdits réglages pour un ou plus desdits paramètres de configuration afin d'améliorer les performances des éoliennes sont des réglages de configuration identifiés pour renforcer la production d'énergie active d'une éolienne.

10. Système de configuration d'éoliennes selon la revendication 8 ou la revendication 9, dans lequel lesdits réglages pour un ou plus desdits paramètres de configuration pour renforcer les performances des éoliennes sont des réglages de configuration identifiés pour étendre la durée de vie d'un ou plusieurs composants des éoliennes.

11. Système de configuration d'éoliennes selon l'une quelconque des revendications précédentes, dans lequel ledit système de configuration est intégré à un système de supervision et d'acquisition de données (SCADA).

12. Système de configuration d'éoliennes selon l'une quelconque des revendications précédentes, dans lequel ladite action d'optimisation des réglages de paramètres de configuration est seulement effectuée si lesdits réglages de paramètres de configuration dévient de ladite plage identifiée préférée d'une quantité prédéterminée.

13. Système de configuration d'éoliennes selon l'une quelconque des revendications précédentes, dans lequel lesdits paramètres de configuration se voient affecter un niveau de hiérarchie choisi entre au moins deux niveaux de hiérarchie différents et
dans lequel ledit système de configuration est configuré pour choisir un type d'action d'optimisation de réglages de paramètres de configuration parmi au moins deux actions d'optimisation différentes sur la base du niveau de hiérarchie affecté au paramètre de configuration.

14. Système de configuration d'éoliennes selon l'une quelconque des revendications précédentes, dans lequel ladite action d'optimisation de réglages de paramètres de configuration est configurée pour être effectuée automatiquement en ajustant les réglages de paramètres de configuration directement dans les systèmes de commande d'éoliennes.

15. Procédé de traitement d'une pluralité de réglages de paramètres de configuration, chaque réglage étant recueilli auprès du système de commande de l'une d'une pluralité d'éoliennes comparables, ledit procédé comprenant :
l'analyse de la pluralité de réglages de paramètres de configuration pour identifier une ou des plages préférées de réglage(s) pour le paramètre de configuration (S302, S405) et
l'initiation d'une action d'optimisation de réglages de paramètres de configuration sur la base de la ou des plages identifiées préférées de réglage(s) (S303, S304),
le procédé comprenant en outre l'étape d'identification de réglages de paramètres de configuration écartés des réglages de paramètres de configuration analysés au moyen de la ou des plages identifiées préférées de réglage(s) (S406) et
dans lequel ladite action d'optimisation comprend la correction desdits réglages de paramètres de configuration écartés identifiés (S407).

16. Procédé selon la revendication 15, comprenant en outre l'étape de collecte de ladite pluralité de réglages de paramètres de configuration auprès des systèmes de commande d'éoliennes.

17. Procédé selon la revendication 15 ou la revendication 16, dans lequel ladite action d'optimisation comprend l'ajustement de réglages de paramètres de configuration dans un ou plusieurs desdits systèmes de commande d'éoliennes sur la base de la plage identifiée préférée de réglages.

18. Procédé selon la revendication 15, 16 ou 17, comprenant en outre l'étape d'identification d'éoliennes comparables parmi une plus grande sélection d'éoliennes.

19. Procédé selon la revendication 18, dans lequel l'identification d'éoliennes comparables est au moins en partie basée sur des données établies d'éoliennes et/ou des données environnementales se rapportant aux éoliennes.

20. Procédé selon l'une quelconque des revendications 15 à 19, dans lequel ledit système de configuration analyse des données de performances d'éoliennes recueillies conjointement avec lesdits réglages de paramètres de configuration pour identifier ladite plage préférée de réglages pour un ou plus desdits paramètres de configuration afin de renforcer les performances des éoliennes.

21. Procédé selon la revendication 20, dans lequel lesdits réglages pour un ou plus desdits paramètres de configuration afin de renforcer les performances des éoliennes sont des réglages de configuration identifiés pour renforcer la production d'énergie active d'une éolienne et/ou pour prolonger la durée de vie d'un ou plusieurs composants d'éolienne.

22. Procédé selon l'une quelconque des revendications 15 à 21, dans lequel lesdits paramètres de configuration se voient affecter un niveau de hiérarchie choisi parmi au moins deux niveaux de hiérarchie différents et
dans lequel ledit procédé comprend l'étape de choix d'un type d'action d'optimisation de réglages de paramètres de configuration parmi au moins deux actions d'optimisation différentes sur la base du niveau hiérarchique affecté au paramètre de configuration.

23. Procédé selon l'une quelconque des revendications 15 à 23, dans lequel ladite action d'optimisation de réglages de paramètres de configuration est automatiquement réalisée en ajustant des réglages de paramètres de configuration directement dans les systèmes de commande des éoliennes.

24. Produit de programmation informatique qui, lorsqu'il tourne sur un ordinateur, est capable de réaliser le procédé selon une ou plusieurs des revendications 15 à 23.
